Europäisches Patentamt

European Patent Office

Office européen des brevets

(11) Veröffentlichungsnummer: **0 012 423**
**A1**

# (12) EUROPÄISCHE PATENTANMELDUNG

(21) Anmeldenummer: 79105086.7

(22) Anmeldetag: 11.12.79

(51) Int. Cl.³: **G 21 C 13/04, G 21 C 13/08**

(30) Priorität: 18.12.78 DE 2854580

(43) Veröffentlichungstag der Anmeldung: 25.06.80
Patentblatt 80/13

(84) Benannte Vertragsstaaten: **AT BE FR GB IT NL SE**

(71) Anmelder: **Karrena GmbH, Rüdigerstrasse 20,
D-4000 Düsseldorf 30 (DE)**

(72) Erfinder: **Stein, Günter, Katzbachstrasse 54,
D-4330 Mülheim (DE)**
Erfinder: **Bergfeld, Karl-Dieter, Siedlung Röttgen 28,
D-4020 Mettmann (DE)**
Erfinder: **Gorris, Rainer, Brückstrasse 48,
D-4030 Ratingen 1 (DE)**
Erfinder: **Nowak, Herbert, Schützenstrasse 43,
D-4005 Meerbusch 3 (DE)**

(74) Vertreter: **Meyer, Alfred, Dipl.-Ing. Dr. jur.,
Kreuzstrasse 32, D-4000 Düsseldorf 1 (DE)**

(54) **Keramische Auskleidung.**

(57) Die Erfindung ist anwendbar für den Bau von Reaktorbehältern. Diese haben im allgemeinen eine keramische Auskleidung, die durch einen äußeren Mantel (10) und ein inneres Futter (13, 14) gebildet ist. Letzteres ist aus einzelnen Steinen (18, 19) aufgebaut. Die Höhe der möglichen Betriebstemperatur war bisher unter anderem auch durch die Schwierigkeit begrenzt, die auftretenden Wärmedehnungen zu beherrschen. Es war deshalb Aufgabe der Erfindung, eine Auskleidung so auszubilden, daß der Reaktorbehälter auch mit weit oberhalb 1273 K liegenden Temperaturen betrieben werden kann. Diese Aufgabe wird dadurch gelöst, daß das Futter (13, 14) auf der Tragkonstruktion (16) in horizontaler Richtung verschiebbar ist und daß die Steine (18, 19) eine in Umfangsrichtung wirksame Verriegelung aufweisen.

### Keramische Auskleidung

Die Erfindung betrifft eine keramische Auskleidung, insbesondere für Reaktorbehälter, mit einem äußeren Mantel, mit einem inneren, aus einzelnen Steinen aufgebauten Futter, das auf einer Tragkonstruktion aufliegt, und mit zum Ausgleich von Wärmedehnungen im Bereich des Futters dienenden Dehnfugen.

Es ist bekannt, das Futter eines solchen Reaktorbehälters aus feuerfesten Steinen aufzubauen. Das Futter wird von einer Tragkonstruktion getragen, auf der es fest aufsteht und die mit dem äußeren Stahlmantel verbunden ist.

Es ist bekannt, die Innenseite des Futters mit warmfestem Stahl auszukleiden, um das Eindringen des im Reaktor befindlichen Mediums zu verhindern. Dieses Medium kann chemisch aggressive Bestandteile und/oder feste Partikel enthalten, die nicht in die zwischen den Steinen befindlichen Fugen eindringen sollen.

Eine aus warmfestem Stahl bestehende Auskleidung hält jedoch

- 2 -

nur Temperaturen bis zu etwa 1000°C stand. Wenn ein Betrieb
des Reaktors mit höheren Temperaturen erforderlich ist, läßt
sich deshalb eine Stahlauskleidung nicht mehr verwenden,
sondern es muß in Kauf genommen werden, daß die Fugen offenbleiben und die chemisch aggressiven Medien und/oder die
festen Partikel in die Fugen eindringen oder diese sogar
durchsetzen. Hierdurch ist das Futter einem sehr schnellen
Verschleiß unterworfen, und vielfach ist der Betrieb des
Reaktors mit derartigen Medien überhaupt nicht möglich.

Es besteht aber andererseits für die Durchführung bestimmter
Prozesse durchaus das Bedürfnis, einen solchen Reaktor mit
weit über 1000°C liegenden Temperaturen zu betreiben und
dabei auch Medien zu verwenden, in denen feste Partikel
bzw. auch Fremdkörper enthalten sind.

Hiervon ausgehend lag der Erfindung die Aufgabe zugrunde, eine
Auskleidung  der eingangs genannten Art so auszubilden,
daß er unter Verwendung von Medien, die feste Partikel enthalten, auch bei weitoberhalb 1000°C liegenden Temperaturen
betrieben werden kann.

Zur Lösung dieser Aufgabe wird erfindungsgemäß vorgeschlagen,
daß das Futter auf der Tragkonstruktion in horizontaler
Richtung verschiebbar ist und daß die Steine eine in Umfangsrichtung wirksame Verriegelung aufweisen.

Bei einer nach der Erfindung ausgebildeten Auskleidung liegen die Steine des Futters in kaltem Betriebszustand so eng aneinander an, daß die Fugen geschlossen sind. Mit zunehmender Erwärmung der Auskleidung während des Betriebes dehnen sich die Steine des Futters dem Grad der Erwärmung entsprechend aus. Diese Ausdehnung wird sowohl in horizontaler Richtung von innen nach außen als auch in Umfangsrichtung des im Gesamtquerschnitt meist kreisförmigen Futters erfolgen. Wenn jetzt gemäß dem Vorschlag der Erfindung das Futter auf die Tragkonstruktion in horizontaler Richtung verschiebbar aufgesetzt ist, wird der in Umfangsrichtung zwischen den aneinanderliegenden Steinen auftretende und durch die Dehnung in dieser Richtung bedingte Druck das Futter etwas nach außen verschieben können, wodurch sich der Umfang des Futters geringfügig vergrößert. Da diese Verschiebung durch den in Umfangsrichtung zwischen den Steinen herrschenden Druck bewirkt wird, wird die Verschiebung auch nur so weit erfolgen, als die Steine in Umfangsrichtung noch aneinander liegen. Somit sind die Fugen zwischen den Steinen auch nach der Erwärmung auf die Betriebstemperatur immer noch im wesentlichen geschlossen. Es können also keine festen Partikel in die Fugen eindringen bzw. sich dort festsetzen. Eine gute Dichtigkeit bleibt aufrechterhalten.

- 4 -

Wenn die Betriebstemperaturen wieder sinken und sich die Steine des Futters abkühlen, werden sie sich wieder zusammenziehen, und zwar auch in Umfangsrichtung des Futters. Aufgrund der in Umfangsrichtung vorhandenen Verriegelung zwischen den Steinen werden die durch das Zusammenziehen bewirkten Kräfte zu einem Zusammenziehen des ganzen Futters derart führen, daß sich sein Umfang wieder etwas verkleinert und die vor der Erwärmung vorhandene Ausgangssituation ungefähr wieder erreicht wird. Es bleiben die Fugen zwischen den Steinen also auch bei einer Abkühlung geschlossen.

Die Verriegelungen in Umfangsrichtung werden also nur auf Zug beansprucht. Es gibt verschiedene Möglichkeiten, den Steinen eine solche Form zu geben, daß sie in Umfangsrichtung formschlüssig ineinandergreifen.

Die Betriebstemperatur eines mit der nach der Erfindung ausgebildeten Auskleidung versehenen Reaktorbehälters z.B. hängt im wesentlichen also von der Temperaturbelastbarkeit des Steinmaterials ab. Da die Wärmedehnungen nicht zu einem Öffnen der zwischen den Steinen befindlichen Fugen führen, kann der Reaktor auch bei hohen Temperaturen mit Medien betrieben werden, die feste Partikel bzw. Fremdkörper enthalten. Wegen der Fähigkeit, auch stärkere Wärmedehnungen aufzunehmen bzw. auszugleichen, läßt sich auch der äußere Mantel vor Druckbeanspruchungen, die aus der Auskleidung kommen, weitgehend schützen.

Nachfolgend werden einige vorteilhafte Ausgestaltungen
der Erfindung näher beschrieben. So kann es für bestimmte
Anwendungen günstig sein, wenn das Futter aus mindestens
zwei zueinander konzentrischen Schalen gebildet ist, die
unabhängig voneinander auf der Tragkonstruktion verschiebbar
sind und zwischen denen in horizontaler Richtung eine
Dehnfuge vorhanden ist.

Es kann sich also mit zunehmender Erwärmung zunächst die
innere Schale des Futters ausdehen und dem Grad der Erwärmung
entsprechend auf der Tragkonstruktion ein Stück nach außen
verschieben, ohne daß irgendeine mechanische Beanspruchung
auf die nächstäußere Schale ausgeübt wird. Letztere wird
sich erst etwas später ihrer eigenen Erwärmung entsprechend
nach außen verschieben.

Zur Erzielung der Verschiebbarkeit zwischen dem Futter bzw.
einer Schale des Futters und der Tragkonstruktion können
verschiedene technische Maßnahmen ergriffen werden. So ist
es z.B. denkbar, zwischen einer unteren Steinlage des Futters
bzw. einer Schale und der Tragkonstruktion eine Gleitschicht
auszubilden. Je nach Größe der Gewichtsbelastung auf der
untersten Steinlage kann es eventuell bereits ausreichend
sein, nur eine freie Verschiebbarkeit zwischen dieser und

- 6 -

einer ebenen Fläche der Tragkonstruktion vorzusehen, wobei letztere aus Beton oder Stahl bestehen kann. Die Reibung kann aber z.B. auch durch eine Zwischenlage aus geeignetem Material wie z.B. Glimmer herabgesetzt werden.

Es kann aber erfindungsgemäß auch jeweils zwischen einer unteren Steinlage des Futters bzw. einer Schale und der Tragkonstruktion eine Wälzlagerung ausgebildet sein. Hierzu können die Steine einer unteren Steinlage im mittleren Bereich ihrer Unterseite eine zur teilweisen Aufnahme von Wälzelementen dienende Aussparung aufweisen, wobei die die Aussparung umgebenden Ränder als Führung für die Wälzelemente dienen. Als Wälzelemente können eine Vielzahl von kleinen Kugeln aus entsprechend belastbarem Material, z.B. aus Korund oder warmfestem Stahl, Verwendung finden. Man kann aber auch größere Kugeln in geringerer Anzahl oder auch zylindrische Walzen vorsehen.

Ferner kann es erfindungsgemäß vorteilhaft sein, wenn die Steine der unteren Steinlage auf Stahlplatten aufliegen, die ihrerseits auf der Tragkonstruktion verschiebbar sind. Hierbei können die Stahlplatten jeweils nach oben gerichtete Anschläge aufweisen, die in die jeweils aufliegenden Steine in horizontaler Richtung formschlüssig eingreifen. Hierdurch wird verhindert, daß die Steine auf den Stahlplatten wandern.

- 7 -

Sofern Stahlplatten verwendet werden, können diese zumindest an ihren in radialer Richtung verlaufenden Seitenkanten nach unten abgewinkelte Führungsleisten für die Wälzelemente aufweisen. Je nach Ausführung der Wälzelemente werden auch an den in Umfangsrichtung verlaufenden Kanten Führungsleisten vorgesehen werden.

Weiterhin wird erfindungsgemäß vorgeschlagen, daß in radialer Richtung jeweils mindestens zwei Wälzelemente unterhalb eines Steins oder einer Steinplatte angeordnet sind und daß in den zwischen den Wälzelementen liegenden Bereich ein vom Stein oder der Stahlplatte ausgehendes und sich nach unten erstreckendes Führungselement hineinragt. Letzteres dient dem Zweck, eine gleichmässige Führung der Wälzelemente in radialer Richtung zu gewährleisten. Zu demselben Zweck kann die Tragkonstruktion, die vorzugsweise die Form einer Ringplatte haben wird, an der Oberseite in Umfangsrichtung / und/oder in radialer Richtung verlaufende Anschlagleisten für die Wälzelemente aufweisen.

Ferner ist es denkbar, daß jeweils ein Stein einer unteren Steinlage auf mehreren Stahlplatten aufliegt. Die Wärmedehnung der Stahlplatten läßt sich hierbei besser ausgleichen.

Die für die Durchführung eines Prozesses z.B. in einem Reaktorbehälter zusammenzuführenden Medien werden im allgemeinen von oben her zugeführt werden, während der Bodenbereich
des        Behälters mit einem geeigneten Auslaß versehen
sein wird. Innerhalb dieses Bodenbereiches wird die Auskleidung
meist einen anderen Aufbau haben als das die seitliche
Begrenzung des Innenraumes bildende Futter. Da letzteres
verschiebbar ausgebildet sein soll und die Auskleidung von
der Tragkonstruktion an abwärts meist feststehend sein wird,
kommt es darauf an, einen technisch einwandfreien Übergang
zwischen diesen beiden Bereichen zu schaffen.

Zu diesem Zweck wird von der Erfindung weiterhin vorgeschlagen,
daß die Steine einer unteren Steinlage eine geringere radiale
Tiefe haben als die Steine der anderen Steinlagen, daß
in eine hierdurch gebildete Aussparung an der Innenseite
des verschiebbaren Futters ein Anschlußteil eines sich nach
unten erstreckenden Auskleidungsbereiches hineinragt und
daß zwischen diesem und den benachbarten Steinen des Futters
eine Dehnfuge gebildet ist.

Der Anschlußteil des unteren Auskleidungsbereiches gewährleistet einen im wesentlichen kontinuierlichen Übergang
zwischen der Innenwandung des verschiebbaren Futters und
des unteren Teils der Auskleidung, während gleichzeitig
die Lagerung zwischen der Tragkonstruktion und der unteren
Steinlage durch den Anschlußteil abgedeckt und geschützt
wird. Die Dehnfuge ermöglicht den Ausgleich zwischen der

- 9 -

Bewegung des Futters einerseits und Wärmedehnungen des
unteren Auskleidungsbereiches andererseits. Die Dehnfuge
kann hierbei also teils in einer ungefähr senkrechten
Umfangsebene und teils in einer etwa horizontalen Ebene
verlaufen.

Es ist erfindungsgemäß aber auch eine andere Ausführungsform für diesen Übergangsbereich denkbar derart, daß die
Steine der unteren Steinlage sich über ihren Auflagebereich
auf der Tragkonstruktion ein Stück nach innen erstrecken
und in diesem Teil nach unten hin verlängert sind, wobei
diese Verlängerung den Auflagebereich der unteren Steinlage
auf der Tragkonstruktion von der Innenseite her abdeckt.

Je nach Stärke des Futters bzw. seiner inneren Schale und
der darunter anschließenden Auskleidung kann es auch zweckmässig sein, daß die Steine der unteren Steinlage jeweils einen
nach innen über die besagte Verlängerung hinausragenden
Vorsprung aufweisen, der mit einem darunter liegenden Teil
der Auskleidung eine waagerechte Dehnfuge bildet. Dieser
Vorsprung dient dem Zweck, den Innendurchmesser des Futters
in geeigneter Weise in den meist kleineren Innendurchmesser
der unteren Auskleidung übergehen zu lassen und gleichzeitig
auch eine Möglic-hkeit zu schaffen, durch die Trennfuge
Wärmedehnungen im Bereich zwischen der untersten Steinlage
und dem unteren Auskleidungsteil auch in senkrechter Richtung
auszugleichen.

Ferner kann der Auflagebereich zwischen der unteren Steinlage und der Tragkonstruktion nach innen hin zusätzlich durch eine Isolierschicht abgedeckt sein, die gleichzeitig auch als Dichtung in diesem Bereich wirkt und im übrigen die Stahlplatten und die Wälzelemente schützt.

Wenn das Futter in der von der Erfindung vorgeschlagenen Weise in horizontaler Richtung von innen nach außen auswandern kann, wird auch die Konstruktion des Futters im oberen Teil des Futters so zu wählen sein, daß diese Beweglichkeit nicht nachteilig beeinflußt wird. Man kann entweder den oberen Teil mit einer selbständigen Tragkonstruktion abfangen. Wenn aber der obere Bereich des Futters z.B. die Form eines Gewölbes hat, das von dem zylindrischen Futterteil getragen werden soll, ist es erfindungsgemäß vorteilhaft, wenn zwischen dem Gewölbe und den etwa senkrechten Teilen des Futters oder einer Futterschale eine Gleitfuge ausgebildet ist. Es kann bereits das Fehlen eines Formschlusses in horizontaler Richtung ausreichend sein, um ein entsprechendes Gleiten zu ermöglichen. Gegebenenfalls kann auch eine Gleitschicht zwischengelegt werden.

Sollten sich aufgrund der Verschiebbarkeit Schwierigkeiten bezüglich der Dichtigkeit des Futters ergeben, z.B. aufgrund von besonders hohem Druck im Innenraum des Druckbehälters, so läßt sich dies gemäß einem weiteren Vorschlag der Erfindung dadurch beheben, daß die Außenseite des Futters oder
zumindest der inneren Schale desselben mit einem Luftpolster
umgeben ist, dessen Druck höher ist als der im Innenraum
des Druckbehälters herrschende Druck. Um keine zu plötzliche
Abkühlung der Futtersteine zu verursachen, kann die Luft
des Luftpolsters auf eine entsprechende Temperatur vorgewärmt
sein.

Nachfolgend werden besonders bevorzugte Ausführungsformen
der Erfindung anhand einer Zeichnung näher beschrieben.
Im einzelnen zeigen:

Fig. 1 in schematischer Darstellung einen in einer senkrechten
        Ebene liegenden Schnitt durch einen Reaktor-Druckbehälter;

Fig. 2 in vergrößertem Maßstab den Auflagebereich des Futters
        bei dem Reaktor-Druckbehälter nach Fig. 1;

Fig. 3 in einer der Fig. 2 entsprechenden Darstellung eine
        abgewandelte Ausführungsform;

Fig. 3A eine Ansicht auf einen Stein der unteren Steinlage von unter

Fig. 4 ebenfalls in einer der Fig. 2 entsprechenden Darstellung eine nächste Ausführungsform;

Fig. 5 einen Teilschnitt in einer waagerechten Ebene entlang der Linie V-V in Fig. 4;

Fig. 6 einen Teilschnitt entlang der Linie VI-VI in Fig. 5;

Fig. 7 eine Draufsicht auf einen Stein des Futters;

Fig. 8 eine Abwicklung des Steins in der Darstellung nach Fig. 7, gesehen von der Seite.

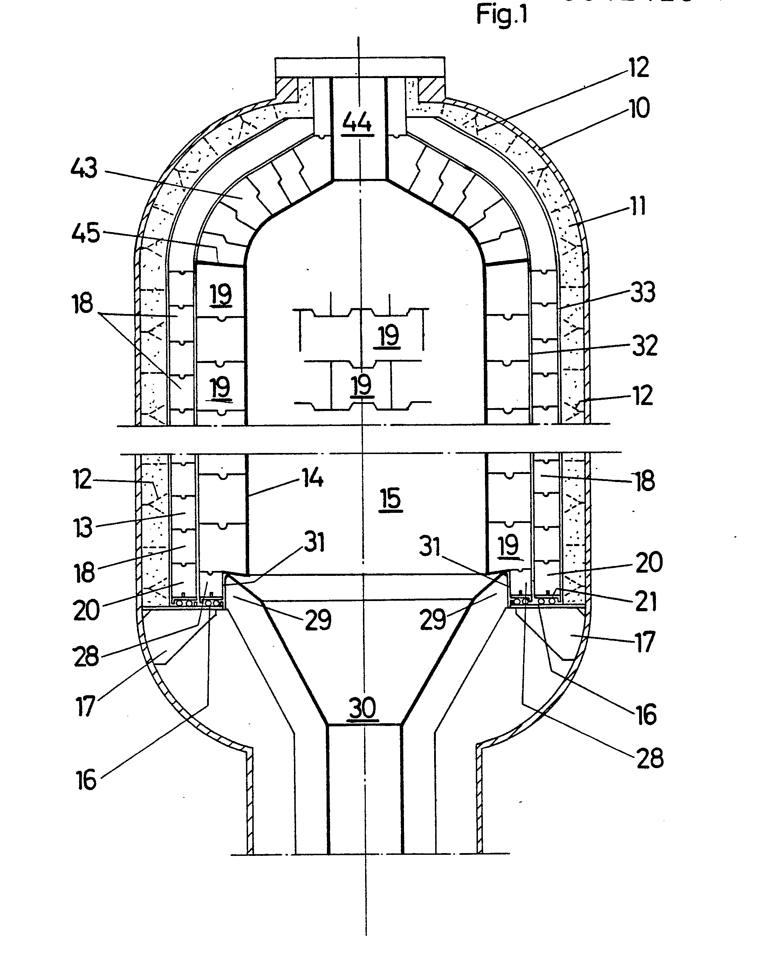

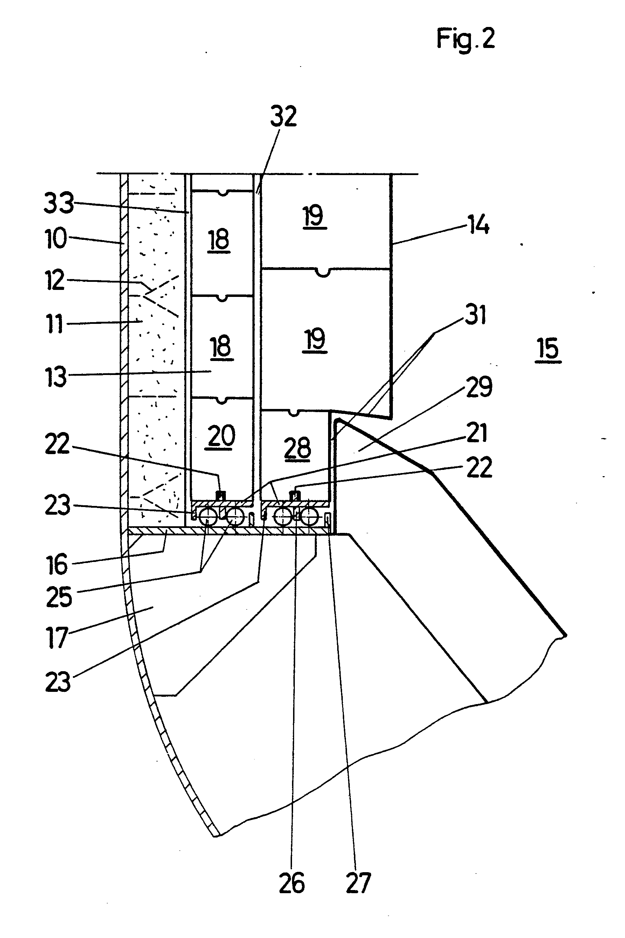

In der Ausführungsform nach den Fig. 1 und 2 hat der Reaktor-Druckbehälter einen äußeren Stahlmantel 1o, dessen Innenseite mit einer Isolierschicht 11 aus feuerfestem Beton oder einem ähnlichen Material ausgekleidet ist. Die Isolierschicht 11 wird mit Hilfe von Ankerstiften 12 gehalten, die mit dem Stahlmantel 1o verschweißt sind.

Das Futter des Reaktor-Druckbehälters ist aus einer äußeren Schale 13 und einer inneren Schale 14 gebildet, wobei letztere einen im Querschnitt kreisförmigen Innenraum 15 begrenzt. Die Schalen 13 und 14 stehen auf einer Ringplatte 16 auf, die aus Stahl besteht und durch Konsolen 17 am Stahlmantel 1o abgestützt wird.

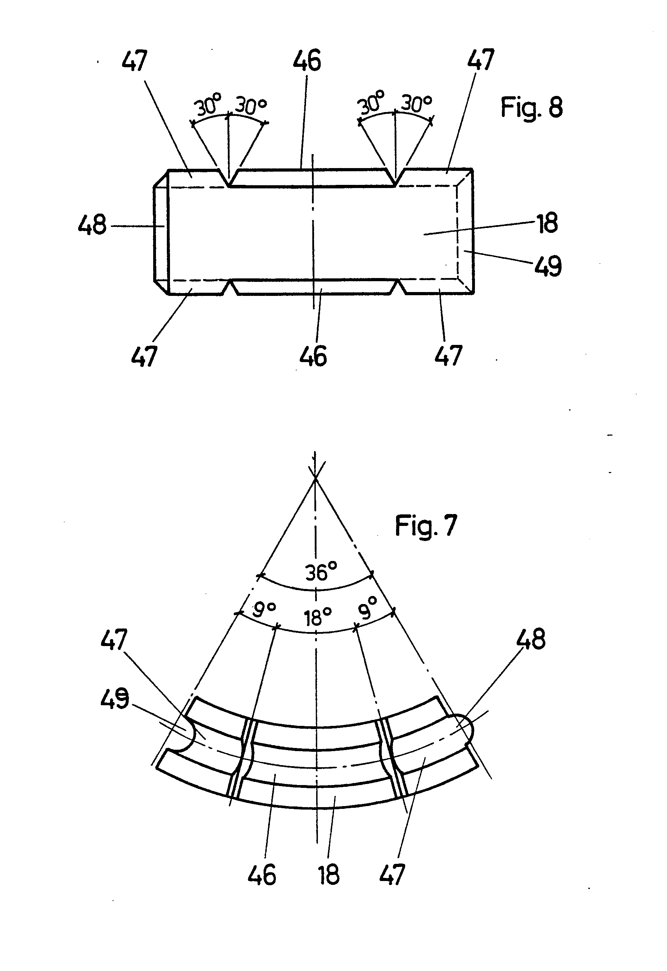

In ihren senkrechten Bereichen sind die äußere Schale 13 und die innere Schale 14 aus einzelnen Steinen 18 bzw. 19 aufgebaut, die eine solche Form haben, daß sie eine Verriegelung in Umfangsrichtung bilden. Der zwischen den Steinen 18 bzw. 19 jeweils gebildete Verband wird später im einzelnen anhand der Fig. 7 und 8 beschrieben.

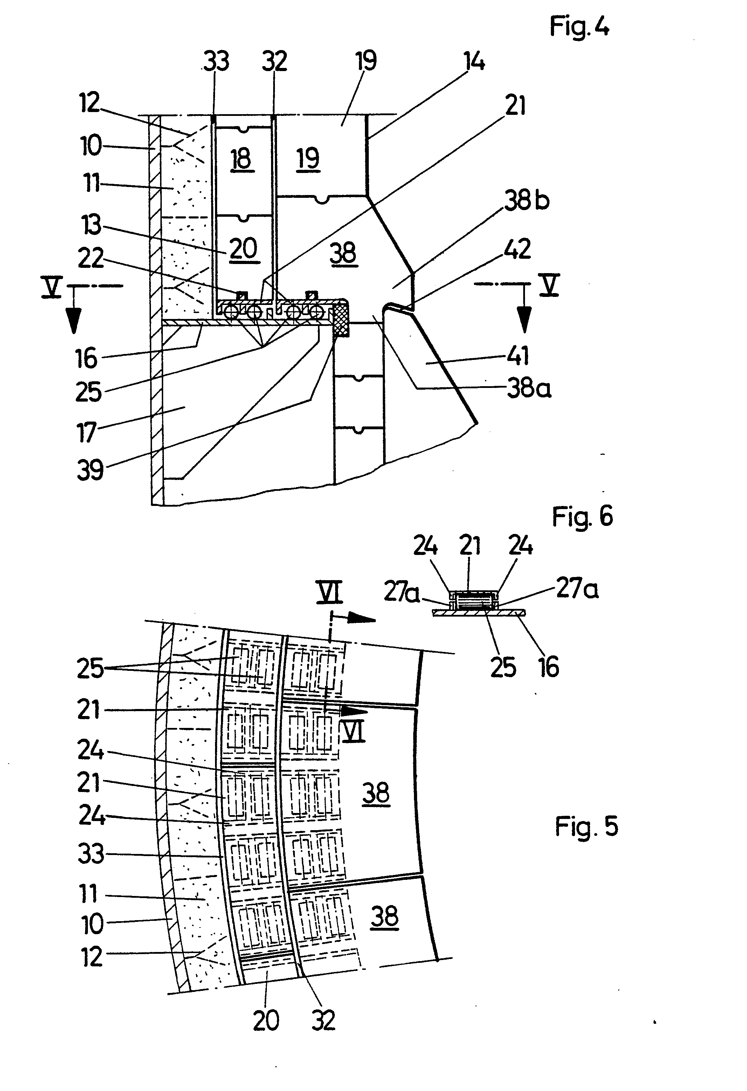

Die Steine 18 der äußeren Schale 13 haben eine untere Lage von Steinen 2o, die an ihrer Unterseite eine ebene Fläche bilden und auf Stahlplatten 25 aufliegen. Jede Stahlplatte 21 hat einen sich nach oben erstreckenden Anschlag 22, der in eine entsprechende Aussparung der Steine 2o in allen Richtungen formschlüssig eingreift, so daß bei einer Ausdehnung der äußeren Schale 13 die Stahlplatte 21 mitgenommen wird. An ihrem äußeren Rand haben die Stahlplatten 21 jeweils eine nach unten abgewinkelte Führungsleiste 23, während auch an den in radialer Richtung verlaufenden Seiten nach unten abgewinkelte Führungsleisten 24 vorhanden sind. Letztere sind nur in Fig. 6 gezeigt, die ebenso wie Fig. 5 in bezug auf die Ausbildung der Stahlplatten auch für die Ausführungsform nach Fig. 1 und 2 gültig ist. Fig. 5 läßt ferner erkennen, daß jeder Stein 18 bzw. 2o von drei Stahlplatten 21 getragen wird.

Jede Stahlplatte 21 wiederum wird von zwei zylindrischen Walzen 25 getragen, die auf der Oberseite der Ringplatte 16 in radialer Richtung abrollen können. Um immer einen bestimmten Mindestabstand zwischen den beiden Walzen 25 einer Stahlplatte zu gewährleisten, erstreckt sich von der Stahlplatte 21 etwa auf der Hälfte ihrer radialen Abmessung ein Führungselement 26 in Form einer Leiste nach unten.

Die Ringplatte 16 hat ihrerseits nach oben gerichtete Anschlagleisten 27, die in Umfangsrichtung verlaufen und die Radialbewegung der Walzen 25 nach innen begrenzen.

Die Steine 19 der inneren Schale 14 haben in radialer Richtung eine größere Abmessung als die Steine 18 der äußeren Schale 13. Die untere Lage der inneren Schale 14 jedoch ist aus Steinen 28 gebildet, die in ihren Abmessungen denjenigen der Steine 20 ungefähr entsprechen und aufgrund ihrer gegenüber den Steinen 19 geringeren radialen Abmessung eine nach innen gerichtete Aussparung bilden, in die ein Anschlußteil 29 eines sich nach unten erstreckenden Auskleidungsbereiches hineinragt. Wie insbesondere auch Fig. 1 erkennen läßt, hat der untere Auskleidungsteil und damit auch der untere Teil des Innenraumes 15 einen sich kegelig nach unten verjüngenden Querschnitt, der einen Auslaß 30 des Reaktor-Druckbehälters bildet.

Der Anschlußteil 29 des unteren Auskleidungsbereiches ist so geformt, daß er mit dem überstehenden Teil der Steine 19 eine Dehnfuge 31 bildet, die so bemessen ist, daß der untere Auskleidungsteil mit der inneren Schale 14 nicht in Berührung kommen kann unabhängig davon, welche Temperaturen herrschen bzw. welche Temperaturschwankungen auftreten. Die Dehnfuge 31 erstreckt sich aber auch noch zwischen dem Anschlußteil 29 und der nach außen hin benachbarten und aus den Steinen 28 gebildeten unteren Lage der inneren Schale 14. Wie aus den Fig. 1 und 2 erkennbar, deckt der Anschlußteil 29 den Auflagebereich der beiden Schalen 13 und 14 auf der Ringplatte 16 von innen her ab.

Zwischen der inneren Schale 14 und der äußeren Schale 13 ist eine Dehnfuge 32 gebildet, und eine weitere Dehnfuge 33 ist zwischen der äußeren Schale 13 und der Isolierschicht 11 vorgesehen.

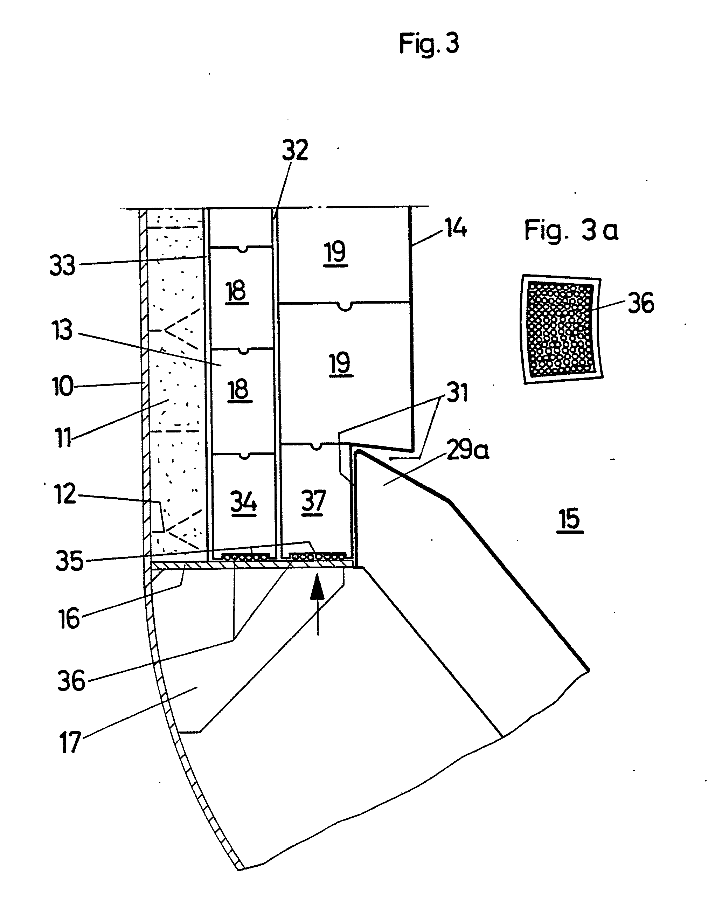

Bei der abgewandelten Ausführungsform nach Fig. 3 sind zunächst dieselben Teile mit denselben Bezugsziffern bezeichnet. Die untere Lage der äußeren Schale 13 ist jetzt aus Steinen 34 gebildet, die an ihrer Unterseite eine Aussparung 35 aufweisen. In diese greifen eine größere Anzahl von Wälzelementen 36 ein. Als Wälzelemente 36 können z.B. Walzen aus Rundstahl oder aber auch eine Vielzahl kleiner Kugeln dienen. Letztere können auch aus keramischem Material hergestellt sein, das entsprechend mechanisch belastbar ist und hohen Temperaturen standhält. Korund ist als Material für derartige Kugeln geeignet. Da die Wälzelemente 36 in die Aussparung 35 eingreifen, dienen die Ränder derselben gleichzeitig als Führung für die Wälzelemente 36 in radialer
Richtung und auch in Seitenrichtung.

Genau das gleiche gilt für die unteren Steine 37 der inneren Schale 14, die sich von den Steinen 28 der zuvor beschriebenen Ausführungsform nur durch die Aussparung 35 unterscheiden.

Während bei der Ausführungsform nach Fig. 2 die in radialer
Richtung breiteren Steine 19 der inneren Schale 14 den oberen
Bereich des Anschlußteils 29 ein Stück nach innen überragen
und dadurch eine Tropfnase bilden, mit deren Hilfe z.B.
abtropfende Schlacke ohne die Möglichkeit eines Eindringens in
die Dehnfuge 31 auf die Innenseite der Auskleidung gelangt,
ist bei der Ausführungsform nach Fig. 3 ein Anschlußteil 29a
vorgesehen, dessen trichterförmige Innenfläche in die Innenseite der inneren Schale 14 nur unter Bildung einer Abwinklung übergeht, so daß der Eingang der Dehnfuge 31 nicht
unmittelbar geschützt ist.

Bei der Ausführungsform nach Fig. 4 ist das Futter ebenfalls
wieder aus der äußeren Schale 13 und der inneren Schale 14 gebildet, die beide auf Stahlplatten 21 aufstehen und von
der Ringplatte 16 getragen werden. Für diejenigen Teile
dieser Ausführungsform, die derjenigen nach den Fig. 1
und 2 entsprechen, sind dieselben Bezugsziffern verwendet.

Die innere Schale 14 hat jetzt eine untere Lage von Steinen 38, die die Stahlplatten 21 nach innen überragen und
eine sich von dort aus nach unten erstreckende Verlängerung 38a bilden, die sich bis in die Höhe der Ringplatte 16 hinab erstreckt und somit den Auflagebereich der
Schalen 13 und 14 von innen her abdeckt. Zur Verbesserung
der Schutzwirkung ist zusätzlich noch eine Isolierschicht
39 vorgesehen. Unterhalb der Verlängerung 38a und der
Isolierschicht 39 schließen nach unten hin weitere Lagen
von Steinen 4o an, die gegenüber dem Innenraum 15 durch
einen unteren Auskleidungsbereich abgedeckt sind.

Letzterer bildet gegenüber der unteren Lage der inneren
Schale 14 einen Anschlußteil 41, der von Vorsprüngen 38b
der Steine 38 von oben her überdeckt wird und mit den
Vorsprüngen 38b eine Dehnfuge 42 bildet. Somit kann
auch zwischen der inneren Schale 14 und dem unteren Auskleidungsbereich eine wesentliche Kraftübertragung aufgrund von unterschiedlichen Wärmedehnungen nicht erfolgen. In gleicher Weise wie bei den zuvor beschriebenen Ausführungsformen ist aber eine solche Lage der Dehnfuge 31 bzw. 42 gewährleistet, daß feste Partikel nicht ohne weiteres eindringen können und daß sich im übrigen ein verhältnismäßig kontinuierlicher Übergang zwischen der Innenseite der inneren Schale 14 und dem darunter anschließenden Auskleidungsbereich ergibt.

Fig. 5 läßt erkennen, daß jeder Stein 2o der unteren Lage der inneren Schale 14 auf insgesamt drei Stahlplatten aufliegt. Dasselbe gilt für die unteren Steine 38 der unteren Lage der inneren Schale 14 bzw. auch für die Steine 19 entsprechend der Ausführungsform nach Fig. 2.

Fig. 5 läßt ferner erkennen, daß die senkrechten Fugen zwischen den Steinen 18 der äußeren Schale 13 einerseits und die senkrechten Fugen zwischen den Steinen 19 der inneren Schale 14 andererseits in Umfangsrichtung gegeneinander versetzt sind.

Wie Fig. 6 zeigt, sind auf der Oberseite der Ringplatte 16 auch noch in radialer Richtung verlaufende Anschlagleisten 27a angeordnet, so daß die Wälzelemente 25 auch an der Ringplatte 16 in einer quer zu ihrer Bewegungsrichtung verlaufenden Richtung geführt sind.

Unter Bezugnahme auf Fig. 1 ist jetzt noch nachzutragen, daß der obere Teil des Innenraums 15 durch ein Gewölbe abgedeckt und begrenzt ist, das aus einzelnen Steinen 43 aufgebaut ist. Die Form der Steine 43 ist so gewählt, daß das Gewölbe selbsttragend hält. Das Gewölbe bildet oben einen Einlaß 44 für das oder die Medien, die dem jeweiligen Prozeß zuzuführen sind.

Das aus den Steinen 43 gebildete Gewölbe liegt auf der inneren Schale 14 auf, wobei zwischen den obersten Steinen 19 und der unteren Lage der Steine 43 eine Gleitfuge 45 gebildet ist. Diese verläuft, von innen nach außen gesehen, in einer kleinen Neigung nach oben, so daß hierdurch denjenigen Kräften entgegengewirkt werden kann, die von den Steinen 43 des Gewölbes ausgehen und in radialer Richtung nach außen wirken. Im übrigen sind die im Bereich der Gleitfuge 45 aufeinanderliegenden Flächen der Steine 19 und 43 eben, so daß sie aufeinander gleiten können. Gegebenenfalls kann auch eine die Reibung herabsetzende Gleitschicht zwischengelegt werden.

Nachfolgend soll anhand der Fig. 7 und 8 die Funktion der in Umfangsrichtung wirkenden Verriegelung zwischen den Steinen der Schalen 13 und 14 beschrieben werden. Da sich die Steine 18 und 19 nur durch ihre Abmessungen unterscheiden, in ihren Formen sonst jedoch grundsätzlich übereinstimmen, genügt die Beschreibung eines aus Steinen 18 gebildeten Steinverbandes.

Die Längsachse eines Steins 18 verläuft bogenförmig. Der Bogenwinkel des Steins 18 beträgt 36°. An der Oberseite und der Unterseite eines Steines 18 sind Federn 46 und Nuten 47 ausgebildet, die beim Aufeinanderlegen der Steine 18 ineinandergreifen. Der Fuß der Federn 46 liegt etwa auf derselben Höhe wie der Boden der Nuten 47, während auch die Rücken der Federn 46 mit den oberen Begrenzungen der Nuten 47 auf etwa gleicher Höhe liegen. Die Federn 46 sind allerdings etwas niedriger, als es der Tiefe der Nuten 47 entspricht.

Wie aus Fig. 1 erkennbar, sind die übereinanderliegenden Lagen der Steine 18 jeweils um eine halbe Steinlänge in Längsrichtung zueinander versetzt. Die Feder 46 eines jeden Steins 18 erstreckt sich im mittleren Bereich desselben über die halbe Steinlänge, während sich die zu beiden Seiten der Feder 46 anschließenden Nuten 47 jeweils über eine viertel Steinlänge erstrecken. Dies ist in Fig. 7 durch die eingetragenen Bogenlängen angegeben. Während sich also der Stein insgesamt über einen Bogenwinkel von 36° erstreckt, nimmt die Feder 46 einen Bogenwinkel von 18° ein. Die beiden Nuten 47 erstrecken sich jeweils über einen Bogenwinkel von 9°.

Die Federn 46 und die Nuten 47 haben jeweils einen halbkreisförmigen Querschnitt. Außerdem sind die Stirnseiten der Federn 46 und der Nuten 47 gegenüber der Senkrechten um etwa 30° abgeschrägt, was sowohl in Fig. 1 als auch in Fig. 8 erkennbar ist.

An den Stirnseiten der Steine 18 sind jeweils eine Feder 48 und eine Nut 49 ausgebildet, die sich in senkrechter Richtung erstrecken und ebenfalls aneinander angepaßte, halbkreisförmige Querschnitte haben.

Die ineinandergreifenden Federn 46 und Nuten 47 der einzelnen Steinlagen bewirken eine Kraftübertragung in Umfangsrichtung. Mit zunehmender Temperatur und entsprechenden Wärmedehnungen werden sich die aneinanderliegenden Steine des Futters in radialer Richtung ein Stück nach außen drücken können. Dies wird durch das eine Verschiebbarkeit der Schalen 13 und 14 ermöglichende Auflager auf der Ringplatte 16 möglich. Hierbei bleiben die dem Innenraum 15 zugewandten Fugen geschlossen. Durch das Ineinandergreifen der in senkrechter Richtung verlaufenden Federn 48 und Nuten 49 an den Stirnseiten und der Federn 46 und 47 an den Ober- und Unterseiten wird gleichzeitig auch die Dichtwirkung in radialer Richtung nach außen verbessert. Sollten höhere Druckbeanspruchungen zu erwarten sein, ist es sogar denkbar, eine dünne Schicht aus einem möglichst elastischen Material zwischen den Federn 46 und 48 einerseits und den Nuten 47 und 49 andererseits vorzusehen.

Sobald eine Abkühlung erfolgt und sich das Material der Futtersteine 18 und 19 wieder zusammenzieht, werden die in Umfangsrichtung wirksamen Verriegelungen ein entsprechendes Zusammenziehen des ganzen Futters bewirken, so daß auch beim Abkühlen offene Fugen zwischen den Futtersteinen nicht entstehen können.

Bei einem Zusammenziehen des Futter infolge von Abkühlung werden die zwischen den Futtersteinen in Umfangsrichtung wirkenden Kräfte zu einem wesentlichen Teil an den um etwa 30$^{\circ}$ geneigten Stirnseiten der Nut- und Federenden übertragen.

Es bedarf im übrigen keiner näheren Erläuterung, daß die Schalen 13 und 14 unabhängig voneinander auf der Tragkonstruktion 16 verschiebbar sind. Die Ausdehnung bei Erwärmung kann z.B. derart erfolgen, daß sich zunächst die innere Schale 14 schneller ausdehnt als die äußere Schale 13, so daß die Trennfuge 32 kleiner wird. Sobald auch die äußere Schale 13 noch weiter erwärmt wird und sich entsprechend mehr ausdehnt, wird die Trennfuge 32 die ursprüngliche Größe ungefähr wieder annehmen. Entsprechendes gilt bei einer Abkühlung. Es läßt sich durch entsprechende Bemessung der Dehnfugen 32 und 33 in jedem Fall sicherstellen, daß auf den Stahlmantel 1o selbst von innen her überhaupt keine Druckbeanspruchung ausgeübt wird.

Die hier anhand eines Reaktorbehälters beschriebene Erfindung ist ganz allgemein für alle Brennkammern anwendbar,

- 23 -

in denen entsprechend hohe Temperaturen auftreten. Eine
Anwendbarkeit ist ferner gegeben für die Auskleidung von
Rauchgaszügen, Schornsteinen oder dergleichen.

## Bezugsziffernliste :

| | | | |
|---|---|---|---|
| 1o | Stahlmantel | 3o | Auslaß |
| 11 | Isolierschicht | 31 | Dehnfuge |
| 12 | Ankerstift | 32 | Dehnfuge |
| 13 | Schale | 33 | Dehnfuge |
| 14 | Schale | 34 | Stein |
| 15 | Innenraum | 35 | Aussparung |
| 16 | Ringplatte | 36 | Wälzelement |
| 17 | Konsole | 37 | Stein |
| 18 | Stein | 38 | Stein |
| 19 | Stein | 38a | Verlängerung |
| 2o | Stein | 38b | Vorsprung |
| 21 | Stahlplatte | 39 | Isolierschicht |
| 22 | Anschlag | 4o | Stein |
| 23 | Führungsleiste | 41 | Anschlußteil |
| 24 | Führungsleiste | 42 | Dehnfuge |
| 25 | Walze | 43 | Stein |
| 26 | Führungselement | 44 | Einlaß |
| 27 | Anschlagleiste | 45 | Gleitfuge |
| 28 | Stein | 46 | Feder |
| 29 | Anschlußteil | 47 | Nut |
| 29a | Anschlußteil | 48 | Feder |
| | | 49 | Nut |
| 27a | Anschlagleiste | | |

**Dipl.-Ing. Dr. jur. Alfred W. Meyer**

Patentanwalt

4 Düsseldorf 1
Kreuzstraße 32
Telefon: (0211) 32 59 64

Mein Zeichen: 6048 Eu 214

Aktenzeichen:

Anmelder: Karrena GmbH, 4ooo Düsseldorf 3o, Rüdigerstraße 2o

## A n s p r ü c h e :

1. Keramische Auskleidung, insbesondere für Reaktorbehälter, mit einem äußeren Mantel, mit einem inneren, aus einzelnen Steinen aufgebauten Futter, das auf einer Tragkonstruktion aufliegt, und mit zum Ausgleich von Wärmedehnungen im Bereich des Futters dienenden Dehnfugen, dadurch gekennzeichnet, daß das Futter (13,14) auf der Tragkonstruktion (16) in horizontaler Richtung verschiebbar ist und daß die Steine (18,19) eine in Umfangsrichtung wirksame Verriegelung aufweisen.

2. Auskleidung nach Anspruch 1, dadurch gekennzeichnet, daß da Futter aus mindestens zwei zueinander konzentrischen Schalen (13,14) gebildet ist, die unabhängig voneinander auf der Tragkonstruktion (16) verschiebbar sind und zwische denen in horizontaler Richtung eine Dehnfuge (32) vorhanden

3. Auskleidung nach Anspruch 1 oder 2, dadurch gekennzeichnet, daß jeweils zwischen einer unteren Steinlage des Futters bz einer Schale und der Tragkonstruktion eine Gleitschicht
ausgebildet ist.

4. Auskleidung nach Anspruch 1 oder 2, dadurch gekennzeichnet,
daß jeweils zwischen einer unteren Steinlage (2o,28) des
Futters bzw. einer Schale (13,14) und der Tragkonstruktion
(16) eine Wälzlagerung ausgebildet ist.

5. Auskleidung nach Anspruch 4, dadurch gekennzeichnet, daß
die Steine (34,37) einer unteren Steinlage im mittleren
Bereich ihrer Unterseite eine zur teilweisen Aufnahme von
Wälzelementen (36) dienende Aussparung (35) aufweisen und
daß die die Aussparung umgebenden Ränder als Führung für
die Wälzelemente (36) dienen.

6. Auskleidung nach Anspruch 3 oder 4, dadurch gekennzeichnet,
daß die Steine (2o,28) der unteren Steinlage auf Stahlplatten (21) aufliegen, die ihrerseits auf der Tragkonstruktion
(16) verschiebbar sind.

7. Auskleidung nach Anspruch 6, dadurch gekennzeichnet, daß
eine Stahlplatte (21) jeweils einen nach oben gerichteten
Anschlag (22) aufweist, der an den jeweils aufliegenden
Stein (2o,28) in horizontaler Richtung formschlüssig angreift bzw. in diesen eingreift.

8. Auskleidung nach Anspruch 6 oder 7, dadurch gekennzeichnet, daß die Stahlplatte (21) zumindest an ihren in radialer Richtung verlaufenden Seitenkanten nach unten abgewinkelte Führungsleisten (24) für die Wälzelemente (25) aufweist.

9. Auskleidung nach einem der vorherigen Ansprüche, dadurch gekennzeichnet, daß in radialer Richtung jeweils mindestens zwei Wälzelemente (25) unterhalb eines Steines oder einer Stahlplatte (21) angeordnet sind und daß in den zwischen den Wälzelementen (25) liegenden Bereich ein vom Stein oder der Stahlplatte (21) ausgehendes und sich nach unten erstreckendes Führungselement (26) hineinragt.

1o. Auskleidung nach einem der vorherigen Ansprüche, dadurch gekennzeichnet, daß die Tragkonstruktion die Form einer Ringplatte (16) hat und daß die Oberseite der Ringplatte (16) in Umfangsrichtung und/oder in radialer Richtung verlaufende Anschlagleisten(27,27a) für die Wälzelemente (25) aufweist.

11. Auskleidung nach einem der Ansprüche 6 bis 1o, dadurch gekennzeichnet, daß jeweils ein Stein (2o,28) einer unteren Steinlage auf mehreren Stahlplatten (21) aufliegt.

12. Auskleidung nach einem der vorherigen Ansprüche, dadurch gekennzeichnet, daß die Steine (28) einer unteren Steinlage eine geringere radiale Tiefe haben als die Steine (19) der anderen Steinlagen, daß in eine hierdurch gebildete Aussparung an der Innenseite des verschiebbaren Futters ein Anschlußteil (29,29a) eines sich nach unten erstreckenden Auskleidungsbereiches hineinragt und daß zwischen dem Anschlußteil (29,29a) und den benachbarten Steinen (19,28) des Futters (14) eine Dehnfuge (31) gebildet ist.

13. Auskleidung nach Anspruch 12, dadurch gekennzeichnet, daß die Dehnfuge (31) sich teils in einer ungefähr senkrechten Umfangsebene und teils in einer etwa horizontalen Ebene erstreckt.

14. Auskleidung nach Anspruch 12 oder 13, dadurch gekennzeichnet, daß der Anschlußteil (29,29a) der Auskleidung den Auflagebereich der unteren Steinlagen (2o,28) auf der Tragkonstruktion (16) von der Innenseite her abdeckt.

15. Auskleidung nach einem der Ansprüche 12 bis 14, dadurch gekennzeichnet, daß das Futter (14) den oberen Bereich des Anschlußteils (29 ) einer trichterförmigen, nach uten anschließenden Auskleidung ein Stück nach innen überragt.

16. Auskleidung nach einem der Ansprüche 1 bis 11, dadurch gekennzeichnet, daß die Steine (38) der unteren Steinlage sich über ihren Auflagebereich auf der Tragkonstruktion oder den Stahlplatten (21) ein Stück nach innen erstrecken und in diesem Teil nach unten hin verlängert sind derart, daß diese Verlängerung (38a) den Auflagebereich der unteren Steinlage (38) auf der Tragkonstruktion (16) von der Innenseite her abdeckt.

17. Auskleidung nach einem der Ansprüche 12 bis 16, dadurch gekennzeichnet, daß die Steine (38) einer unteren Steinlage jeweils einen nach innen hervorstehenden Vorsprung (38b) aufweisen, der mit einem darunter liegenden Anschlußteil (41) der Auskleidung eine Dehnfuge (42) bildet.

19. Auskleidung nach einem der vorherigen Ansprüche, dadurch gekennzeichnet, daß zwischen einem auf den etwa senkrechten Teilen des Futters oder einer Schale (14) aufliegenden Gewölbe (43) und diesen Teilen (14) eine Gleitfuge (45) ausgebildet ist.

2o. Auskleidung nach Anspruch 19, dadurch gekennzeichnet, daß die Gleitfuge (45) von innen nach außen gesehen etwas nach oben geneigt verläuft.

21. Auskleidung nach einem der vorherigen Ansprüche, dadurch gekennzeichnet, daß die Außenseiten des Futters oder zumindest der inneren Schale (14) desselben mit einem Luftpolster umgeben sind, dessen Druck höher ist als der im Innenraum (15) des Reaktorbehälters herrschende Druck.

Fig.1

Fig.2

Fig. 3

Fig. 3a

0012423

3/5

0012423

Fig.4

33 32 19 14

12

10

11 18 19 21

13 38b

22 38 42

V̲ 20 38

16 41

25 38a

17

39

Fig. 6

24 21 24

27a 21 27a

V̲I̲

25 16

Fig. 5

25

21

24

21

24 38

33

11

10 38

12

20 32

Fig. 8

Fig. 7

Nummer der Anmeldung

EP 79 10 5086

**Europäisches Patentamt**

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| | FR - A - 1 428 376 (N.P.G.)<br>* Seite 2, rechte Spalte, Absätze 6,7; Figur 3 * | 1,4,6, 9,10 |
| | -- | |
| | FR - A - 2 361 616 (G.H.T.)<br>* Seite 7, Zeilen 22-28; Seite 8, Absatz 1; Figuren 3-5 * | 1,4,6, 9 |
| | -- | |
| | DE - B - 1 299 112 (D & W)<br>* Spalte 2, Zeilen 38-40; Spalte 3, Zeilen 1-4 * | 1-3 |
| | -- | |
| | GB - A - 1 254 813 (S & W)<br>* Seite 3, Zeilen 47-54, 104-113; Figur 6 * | 3,4 |
| | -- | |
| | DE - A - 2 640 918 (KRAFTWERK UNION)<br>* Seite 6, Zeilen 7-16; Figur 1 * | 2 |
| | -- | |
| A | DE - A - 2 704 750 (KRAFTWERK UNION)<br>* Figur 1 * | 1 |
| | -- | |
| A | FR - A - 1 215 776 (CREUSOT)<br>* Figuren 1-4 * | 4 |
| | -- | |
| | ./. | |

**KLASSIFIKATION DER ANMELDUNG (Int.Cl. 3)**

G 21 C 13/04
13/08

**RECHERCHIERTE SACHGEBIETE (Int. Cl. 3)**

G 21 C 11/08
13/08
13/02
13/04
1/06
11/06
E 04 B 1/36
E 02 D 27/36
27/34
E 01 D 19/04

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 24-03-1980 | KAVCIC |

EPA form 1503.1 06.78

**Europäisches Patentamt**

# EUROPÄISCHER RECHERCHENBERICHT

| EINSCHLÄGIGE DOKUMENTE | | | KLASSIFIKATION DER ANMELDUNG (Int.Cl. 3) |
|---|---|---|---|
| Kategorie | Kennzeichnung des Dokuments mit Angabe, soweit erforderlich, der maßgeblichen Teile | betrifft Anspruch | |
| A | DE - A - 1 684 684 (G.F.K.) <br> * Figuren * <br> -- | 1 | |
| A | GB - A - 961 084 (U.K.A.E.A.) <br> * Seite 1, Zeilen 61-75; Figuren 1,3 * <br> -- | 4 | |
| A | GB - A - 942 259 (FOSTER WHEELER) <br> * Figur 3 * <br> -- | 3 | **RECHERCHIERTE SACHGEBIETE (Int. Cl. 3)** |
| A | FR - A - 2 046 022 (FILIPOZZI) <br> * Figur 2 * <br> ---- | 1 | |

EPA Form 1503.2   06.78